# EUROPÄISCHE PATENTSCHRIFT

(11) **EP 4 051 531 B1**
(45) Veröffentlichungstag und Bekanntmachung des Hinweises auf die Patenterteilung: **27.09.2023**
(21) Anmeldenummer: 20800126.3
(22) Anmeldetag: 30.10.2020
(51) Int. Cl.: B60N 2/225, B60N 2/90, F16H 1/28, F16H 1/32

(54) **GETRIEBEBESCHLAG FÜR EINEN FAHRZEUGSITZ, SOWIE FAHRZEUGSITZ**
GEARING FITTING FOR A VEHICLE SEAT, AND A VEHICLE SEAT
EMMANCHEMENT D'ENGRENAGE POUR UN SIÈGE DE VÉHICULE, ET SIÈGE DE VÉHICULE

(30) Priorität: 31.10.2019 DE 102019129502; 14.04.2020 DE 202020102030 U
(43) Veröffentlichungstag der Anmeldung: 07.09.2022
(73) Patentinhaber: Adient US LLC, Plymouth MI 48170 (US)
(72) Erfinder: ALBERT, Kirubaharan, 51399 Burscheid (DE); SCHOLZ, Grit, 42897 Remscheid (DE); HUEBNER, Daniel, 51371 Leverkusen (DE); HENKEL, Dieter, 42897 Remscheid (DE); PARAMASIVAM, Balaji, 51379 Leverkusen (DE); ROCK, Arkadius, 42719 Solingen (DE); SCHUELER, Rolf, 42579 Heiligenhaus (DE); YASEN, Mothanna, 42929 Wermelskirchen (DE)
(74) Vertreter: Kutzenberger Wolff & Partner
(86) Internationale Anmeldenummer: PCT/EP2020/080506
(87) Internationale Veröffentlichungsnummer: WO 2021/084067

(56) Entgegenhaltungen:
- DE-A1-102004 050 152
- DE-A1-102008 028 102
- DE-A1-102011 107 978

## Beschreibung

Die Erfindung betrifft einen Getriebebeschlag für einen Fahrzeugsitz, insbesondere Kraftfahrzeugsitz, aufweisend einen ersten Zahnkranz, ein den ersten Zahnkranz kämmendes Zahnrad, einen von dem Zahnrad gekämmten weiteren Zahnkranz, und einen drehbaren Exzenter zum Antrieb einer relativen Abwälzbewegung zwischen dem Zahnrad und dem ersten Zahnkranz. Des Weiteren betrifft die Erfindung einen Fahrzeugsitz.

### Stand der Technik

Die DE 103 05 407 B4 offenbart einen Getriebebeschlag für einen Fahrzeugsitz mit einem ersten Hohlrad mit einem Innenzahnkranz, einem von einem Exzenter angetriebenen, das erste Hohlrad kämmenden Ritzel und einem vom Ritzel gekämmten zweiten Hohlrad mit einem zweiten Innenzahnkranz. Die beiden Hohlräder sind um eine gemeinsame Drehachse zueinander verdrehbar, während das Ritzel eine taumelnde Drehbewegung relativ zu den Hohlrädern macht.

Bei einem aus der DE 10 2004 050 152 A1 bekannten, gattungsgemässen Getriebebeschlag für einen Fahrzeugsitz mit einem ersten Hohlrad, einem um eine Drehachse drehbaren Exzenter, einem vom Exzenter angetriebenen, das erste Hohlrad kämmenden Ritzel und einem vom Ritzel gekämmten zweiten Hohlrad, welches an dem ersten Hohlrad gelagert ist, ist bezüglich der Drehachse axial versetzt zum Exzenter wenigstens ein Keilsystem vorgesehen, welches zum Spielausgleich zwischen dem einen der Hohlräder und dem anderen Hohlrad und/oder dem Ritzel wirkt. Das Keilsystem wirkt zum Spielausgleich zwischen dem zweiten Hohlrad und dem ersten Hohlrad und/oder dem Ritzel. Das kleinere der beiden Spiele wird durch das Keilsystem ausgeglichen und das größere Spiel um den gleichen Betrag reduziert, jedoch nicht vollständig ausgeglichen.

Die DE 10 2010 012 980 A1 offenbart einen Getriebebeschlag für einen Fahrzeugsitz mit einem ersten Beschlagteil und einem zweiten Beschlagteil, welche miteinander in Getriebeverbindung stehen mittels eines Zahnrads und eines Zahnkranzes, die miteinander kämmen, und einem von einem Mitnehmer angetriebenen, umlaufenden Exzenter zum Antrieb einer relativen Abwälzbewegung von Zahnrad und Zahnkranz, wobei das erste Beschlagteil den Exzenter aufnimmt, welcher sich an dem zweiten Beschlagteil abstützt. Der Zahnkranz ist an einem ersten Beschlagteil ausgebildet. Das Zahnrad ist an einem zweiten Beschlagteil ausgebildet. Der sich drehende Exzenter, welcher für die Abwälzbewegung zwischen dem Zahnrad und dem Zahnkranz sorgt, bewirkt eine taumelnde Bewegung zwischen den beiden Beschlagteilen. Eine volle Drehung des Exzenters bewirkt eine Drehung der Beschlagteile um einige Winkelgrade.

Aus der DE 10 2006 015 559 B3 ist ein Getriebebeschlag mit zwei Einzelbeschlägen, insbesondere für einen Fahrzeugsitz mit Gurtintegration (Gurtintegralsitz) bekannt. Die beiden Einzelbeschläge sind axial nebeneinander und bezüglich des Kraftflusses parallel angeordnet und weisen jeweils zwei relativ zueinander verdrehbare und mittels eines Exzenterumlaufgetriebes miteinander in Getriebeverbindung stehende Beschlagteile auf, wobei der erste Einzelbeschlag einen Exzenter ohne Spielfreistellung und der zweite Einzelbeschlag einen Exzenter mit Spielfreistellung aufweist. Indem der erste Einzelbeschlag einen Exzenter ohne Spielfreistellung und der zweite Einzelbeschlag einen Exzenter mit Spielfreistellung aufweist, kann der erste Einzelbeschlag hinsichtlich des Wirkungsgrades beim Verstellen des Beschlags und der Herstellungskosten und der zweite Einzelbeschlag hinsichtlich der Spielfreiheit beim Feststellen des Getriebebeschlags optimiert werden.

### Aufgabe

Der Erfindung liegt die Aufgabe zu Grunde, einen Getriebebeschlag, insbesondere Lehneneinsteller der eingangs genannten Art, zu verbessern, insbesondere einen beispielsweise aus der DE 10 2004 050 152 A1 bekannten Beschlag mit einem verbesserten Spielausgleich bereitzustellen, bei dem auch ein größeres Spiel vollständig ausgeglichen werden kann. Zudem ist ein entsprechender Fahrzeugsitz bereitzustellen.

### Lösung

Diese Aufgabe wird erfindungsgemäß gelöst durch einen Getriebebeschlag nach Anspruch 1.

Durch ein Mittel zur Spielfreistellung zwischen dem Zahnrad und dem weiteren Zahnkranz kann ein Spiel zwischen dem Zahnrad und dem weiteren Zahnkranz vollständig ausgeglichen werden, wodurch der Getriebebeschlag insgesamt weniger Spiel aufweist. Das Mittel zur Spielfreistellung zwischen dem Zahnrad und dem weiteren Zahnkranz kann an dem Zahnrad abgestützt und gegen den weiteren Zahnkranz vorgespannt sein. Alternativ kann das Mittel zur Spielfreistellung zwischen dem Zahnrad und dem weiteren Zahnkranz an dem weiteren Zahnkranz abgestützt und gegen das Zahnrad vorgespannt sein.

Zur Spielfreistellung zwischen dem Zahnrad und dem weiteren Zahnkranz ist das elastisch vorspannbare Mittel vorzugsweise in radialer Richtung vorspannbar. Zur Spielfreistellung zwischen dem Zahnrad und dem weiteren Zahnkranz kann das elastisch vorspannbare Mittel zusätzlich oder alternativ auch in Umfangsrichtung vorspannbar sein.

Vorzugsweise wird das elastisch vorspannbare Mittel während der Montage des Getriebebeschlags elastisch vorgespannt. In einem montierten Zustand des Getriebebeschlags kann das elastisch vorspannbare Mittel dauerhaft elastisch vorgespannt sein. Alternativ oder zusätzlich erfolgt eine Vorspannung des elastisch vorspannbaren Mittels im Betrieb des Getriebebeschlags. Das elastisch vorspannbare Mittel muss nicht aus einem federelastischen Werkstoff bestehen, ist jedoch vorzugsweise durch ein insbesondere separat ausgebildetes Federelement aus einem federelastischen Werkstoff, beispielsweise Federstahl oder Gummi, vorspannbar.

Das elastisch vorspannbare Mittel ist eine Scheibe. Eine in radialer Richtung elastisch vorgespannte Scheibe zur Spielfreistellung kann zwischen dem Zahnrad und dem weiteren Zahnkranz wirksam sein. Ein radial äußerer Bereich der Scheibe kann dazu radial über einen radial äußeren Bereich des Zahnrads überstehen.

Eine in Umfangsrichtung elastisch vorgespannte Scheibe zur Spielfreistellung kann zwischen dem Zahnrad und dem weiteren Zahnkranz wirksam sein. Eine Verzahnung der Scheibe kann dazu entsprechend abweichend von einer Verzahnung des Zahnrads ausgebildet sein. Eine in radialer Richtung und in Umfangsrichtung elastisch vorgespannte Scheibe zur Spielfreistellung kann zwischen dem Zahnrad und dem weiteren Zahnkranz wirksam sein.

Unter einer Scheibe ist ein Körper mit einer weitgehend auf einem Kreis angeordneten äußeren Kontur zu verstehen, wobei die äußere Kontur durch Zahnköpfe einer Verzahnung definiert sein kenn. Die Scheibe kann ansonsten dreidimensional, insbesondere gestuft, ausgeführt sein. Eine innere Kontur der Scheibe kann von der Kreisform abweichen, was insbesondere dann hilfreich ist, wenn die Scheibe zur Spielfreistellung in Umfangsrichtung wirksam ist.

Ein radial innerer Bereich der Scheibe kann, insbesondere unter Zwischenlage wenigstens eines Federelements, auf einer Stufe des Zahnrads abgestützt sein. Eine innere Kontur der Scheibe kann von der Kreisform abweichen, was insbesondere dann hilfreich ist, wenn die Scheibe zur Spielfreistellung in Umfangsrichtung wirksam ist.

Die Scheibe kann, insbesondere unter Zwischenlage wenigstens eines Federelements, auf wenigstens einem mit dem Zahnrad verbundenen Mittel, insbesondere wenigstens einem mit dem Zahnrad verbundenen Bolzen, abgestützt sein.

Die Scheibe weist radial innen einen nachgiebigeren Werkstoff auf als radial außen. Ein radial äußerer Bereich der Scheibe kann aus einem Metall, insbesondere aus Stahl gefertigt sein. Ein radial innerer Bereich der Scheibe kann aus einem Kunststoff oder Gummi gefertigt sein.

Ein radial äußerer Bereich der Scheibe radial über einen radial äußeren Bereich des Zahnrads überstehen.

Die Scheibe kann radial außen eine Verzahnung aufweisen. Die Zähnezahl der Verzahnung der Scheibe kann gleich der Zähnezahl des weiteren Zahnkranzes sein. Die Verzahnung der Scheibe kann im Zahneingriff mit dem weiteren Zahnkranz sein.

Ein radial innerer Bereich der Scheibe kann auf einer Stufe des Zahnrads abgestützt sein. Die Stufe kann umlaufend sein. Die Stufe kann zylinderförmig sein. Die Stufe kann umlaufend eine von einer Zylinderform abweichende Form aufweisen, insbesondere um die Scheibe in Umfangsrichtung vorspannen zu können. Die Stufe kann umlaufend eine Wellenform aufweisen. Die Stufe kann umlaufend eine Polygonform aufweisen.

In einem entspannten Zustand der Scheibe kann ein radial äußerer Bereich der Scheibe radial über einen radial äußeren Bereich des Zahnrads überstehen.

Die Scheibe kann eine Verzahnung aufweisen, die im Zahneingriff mit einer Verzahnung des weiteren Zahnkranzes ist. Die Scheibe kann radial außen eine Verzahnung aufweisen, die im Zahneingriff mit einer Verzahnung des weiteren Zahnkranzes ist. Ein Kopfkreisradius der Verzahnung der Scheibe kann größer sein als ein Kopfkreisradius einer Verzahnung des Zahnrads. Dadurch können die Zahnköpfe der Scheibe über die Zahnköpfe des Zahnrads überstehen. Eine Zahndicke der Verzahnung der Scheibe ist vorzugsweise größer als eine Zahndicke der Verzahnung des Zahnrads. Die Zahndicke ist die Länge eines Kreisbogenabschnittes zwischen den Zahnflanken eines Zahns auf einem bestimmten Durchmesser, beispielsweise auf dem Teilkreisdurchmesser.

In einer alternativen Ausführungsform ist die Scheibe an dem weiteren Zahnkranz abgestützt und in Richtung des Zahnrads vorgespannt. Ein Kopfkreisradius der (Innen-) Verzahnung der Scheibe ist dann vorzugsweise kleiner als ein Kopfkreisradius einer Verzahnung des Zahnrads. Die über die Verzahnung überstehende "Scheibe" ist dann am Zahnkranz federnd vorgespannt befestigt und steht gegenüber der Zahnkranzverzahnung radial nach innen vor.

Die Verzahnung der Scheibe kann in eine Umfangsrichtung verdreht zur Verzahnung des Zahnrads sein. Dadurch kann ein Spielausgleich in Umfangsrichtung erreicht werden. Vorzugsweise ist jeweils eine der beiden Zahnflanken eines jeden Zahns der Verzahnung der Scheibe in axialer Richtung bündig mit jeweils einer Zahnflanke eines Zahns der Verzahnung des Zahnrads.

Der Getriebebeschlag kann ein sogenannter Doppelbeschlag sein, aufweisend einen ersten Einzelbeschlag und einen zweiten Einzelbeschlag, die axial nebeneinander und bezüglich eines Kraftflusses parallel angeordnet sind, der erste Einzelbeschlag aufweisend ein erstes Beschlagteil und ein zweites Beschlagteil, welche mittels eines ersten Zahnkranzes und eines ersten Zahnrads, die miteinander kämmen, miteinander in Getriebeverbindung stehen, und einen ersten Exzenter zum Antrieb einer relativen Abwälzbewegung zwischen dem ersten Zahnrad und dem ersten Zahnkranz, wobei der erste Exzenter eine erste Exzentrizität zwischen dem ersten Zahnrad und dem ersten Zahnkranz bewirkt, der zweite Einzelbeschlag aufweisend ein drittes Beschlagteil und ein viertes Beschlagteil, welche mittels eines zweiten Zahnkranzes und eines zweiten Zahnrads, die miteinander kämmen, miteinander in Getriebeverbindung stehen, und einen zweiten Exzenter zum Antrieb einer relativen Abwälzbewegung zwischen dem zweiten Zahnrad und dem zweiten Zahnkranz, wobei der zweite Exzenter eine zweite Exzentrizität zwischen dem zweiten Zahnrad und dem zweiten Zahnkranz bewirkt. Vorzugsweise ist der Getriebebeschlag gekennzeichnet durch ein Mittel zur Spielfreistellung zwischen dem ersten Zahnrad und einem dritten Zahnkranz des Abtriebsmittels, insbesondere eine in radialer Richtung elastisch vorspannbare Scheibe und/oder durch ein Mittel zur Spielfreistellung zwischen dem zweiten Zahnrad und dem dritten Zahnkranz des Abtriebsmittels, insbesondere eine in radialer Richtung elastisch vorspannbare Scheibe.

Durch ein Mittel zur Spielfreistellung zwischen dem ersten Zahnrad und einem dritten Zahnkranz des Abtriebsmittels, insbesondere eine in radialer Richtung elastisch vorgespannte Scheibe und/oder durch ein Mittel zur Spielfreistellung zwischen dem zweiten Zahnrad und dem dritten Zahnkranz des Abtriebsmittels, insbesondere eine in radialer Richtung elastisch vorgespannte Scheibe, ist ein Spiel zwischen dem ersten Zahnrad und dem dritten Zahnkranz und/oder ein Spiel zwischen dem zweiten Zahnrad und dem dritten Zahnkranz reduziert oder eliminiert.

Vorzugsweise sind entweder die beiden Zahnräder oder die beiden Zahnkränze einerseits und das Abtriebsmittel andererseits in radialer Richtung jeweils begrenzt beweglich zueinander und in Umfangsrichtung kinematisch miteinander gekoppelt sind kann ein erfindungsgemäßer Getriebebeschlag einen nicht taumelnden Abtrieb als Schnittstelle zu einer Fahrzeugstruktur aufweisen.

Es sind entweder die beiden Zahnräder oder die beiden Zahnkränze mit dem Abtriebsmittel in radialer Richtung jeweils begrenzt beweglich und in Umfangsrichtung kinematisch gekoppelt verbunden. Das jeweils andere Paar aus Zahnrädern oder Zahnkränzen ist vorzugsweise mittels wenigstens eines Adapters verbunden. Der Adapter kann mit einer Struktur eines Sitzteils verbindbar sein und das Abtriebsmittel kann mit einer Struktur einer Rückenlehne verbindbar sein. Das Abtriebsmittel kann einen radial abstehenden Befestigungsflansch aufweisen, insbesondere zur Verbindung mit einer Struktur einer Rückenlehne, aufweisen.

Vorzugsweise ist an dem ersten Beschlagteil der erste Zahnkranz ausgebildet, an dem zweiten Beschlagteil das erste Zahnrad ausgebildet, an dem dritten Beschlagteil der zweite Zahnkranz ausgebildet, und an dem vierten Beschlagteil das zweite Zahnrad ausgebildet.

Das erste Beschlagteil und das dritte Beschlagteil können wenigstens drehfest miteinander verbindbar oder verbunden sein, insbesondere fest, beispielweise mittels eines Adapters, miteinander verbunden sein. Das zweite Beschlagteil und das vierte Beschlagteil können jeweils in radialer Richtung begrenzt beweglich und in Umfangsrichtung kinematisch gekoppelt mit dem Abtriebsmittel verbunden sein.

Das Abtriebsmittel weist einen dritten Zahnkranz auf, in dem das erste Zahnrad und das zweite Zahnrad abwälzen. Das Abtriebsmittel kann mit dem ersten Zahnrad eine Getriebestufe bilden. Das Abtriebsmittel kann mit dem zweiten Zahnrad eine Getriebestufe bilden.

Die erste Exzentrizität des ersten Einzelbeschlags kann in Umfangsrichtung um einen definierten Winkel gedreht zu der zweiten Exzentrizität des zweiten Einzelbeschlags angeordnet sein. Der Winkel kann größer als 45 Grad sein. Der Winkel kann größer als 90 Grad sein. Der Winkel kann zwischen 150 und 210 Grad betragen. Der Winkel beträgt vorzugsweise 180 Grad. Bei einem Winkel von 180 Grad lassen sich Drehmomentbedarfsschwankungen weitgehend vollständig eliminieren. Dadurch, dass die erste Exzentrizität des ersten Einzelbeschlags in Umfangsrichtung gedreht zu der zweiten Exzentrizität des zweiten Einzelbeschlags angeordnet ist, ist der Drehmomentbedarf gleichmäßiger, das heißt weniger schwankend.

Die Zähnezahl des ersten Zahnrads ist vorzugsweise gleich der Zähnezahl des zweiten Zahnrads. Die Zähnezahl des ersten Zahnkranzes ist vorzugsweise gleich der Zähnezahl des zweiten Zahnkranzes.

Das Mittel zur Spielfreistellung wirkt zwischen dem ersten Zahnrad und einem Zahnkranz des Abtriebsmittels. Das Mittel zur Spielfreistellung kann eine Scheibe sein. Das Mittel zur Spielfreistellung kann ringscheibenförmig sein. Das Mittel zur Spielfreistellung kann eine in radialer Richtung elastisch vorgespannte Scheibe sein.

Die Scheibe kann eine Verzahnung aufweisen, insbesondere zum Zahneingriff mit einem Zahnkranz des Abtriebsmittels. Die Scheibe kann abschnittsweise aus Stahl bestehen. Die Scheibe kann abschnittsweise aus Kunststoff bestehen. Die Scheibe kann abschnittsweise aus Gummi bestehen.

Alternativ oder zusätzlich kann ein Mittel zur Spielfreistellung zwischen dem zweiten Zahnrad und dem Zahnkranz des Abtriebsmittels angeordnet sein. Das Mittel zur Spielfreistellung kann eine Scheibe sein. Das Mittel zur Spielfreistellung kann ringscheibenförmig sein. Das Mittel zur Spielfreistellung kann eine in radialer Richtung elastisch vorgespannte Scheibe sein. Die Scheibe kann eine Verzahnung aufweisen, insbesondere zum Zahneingriff mit einem Zahnkranz des Abtriebsmittels. Die Scheibe kann abschnittsweise aus Stahl bestehen. Die Scheibe kann abschnittsweise aus Kunststoff bestehen. Die Scheibe kann abschnittsweise aus Gummi bestehen.

### Figuren und Ausführungsformen der Erfindung

Im Folgenden ist die Erfindung anhand von drei in den Figuren dargestellter vorteilhafter Ausführungsbeispiele näher erläutert. Die Erfindung ist jedoch nicht auf diese Ausführungsbeispiele beschränkt. Es zeigen:
- Fig. 1:: eine schematische Seitenansicht eines Fahrzeugsitzes mit einem erfindungsgemäßen Getriebebeschlag,
- Fig. 2:: ausschnittsweise eine Schnittdarstellung eines erfindungsgemäßen Getriebebeschlags gemäß eines ersten Ausführungsbeispiels,
- Fig. 3:: einen Schnitt entlang der Linie III - III in Fig. 2,
- Fig. 4:: eine perspektivische Explosionsdarstellung eines erfindungsgemäßen Getriebebeschlags gemäß eines zweiten Ausführungsbeispiels,
- Fig. 5:: eine weitere perspektivische Explosionsdarstellung des Getriebebeschlags aus Fig. 4,
- Fig. 6:: ausschnittweise eine perspektivische Ansicht auf Verzahnungen eines Zahnrads und einer Scheibe des Getriebebeschlags aus Fig. 4,
- Fig. 7:: eine perspektivische Darstellung des Getriebebeschlags aus Fig. 4, wobei ein drittes Beschlagteil und ein Umklammerungsring entfernt sind,
- Fig. 8:: eine weitere perspektivische Darstellung des Getriebebeschlags aus Fig. 4, wobei der Umklammerungsring entfernt ist,
- Fig. 9:: einen Schnitt durch den Getriebebeschlag aus Fig. 4,
- Fig. 10:: eine perspektivische Explosionsdarstellung eines erfindungsgemäßen Getriebebeschlags gemäß eines dritten Ausführungsbeispiels,
- Fig. 11:: ausschnittweise eine perspektivische Ansicht auf Verzahnungen eines Zahnrads und einer Scheibe des Getriebebeschlags aus Fig. 10,
- Fig. 12:: eine perspektivische Darstellung des Getriebebeschlags aus Fig. 10, wobei ein drittes Beschlagteil und ein Umklammerungsring entfernt sind, und
- Fig. 13:: einen Schnitt durch den Getriebebeschlag aus Fig. 10, wobei ein Umklammerungsring entfernt ist.

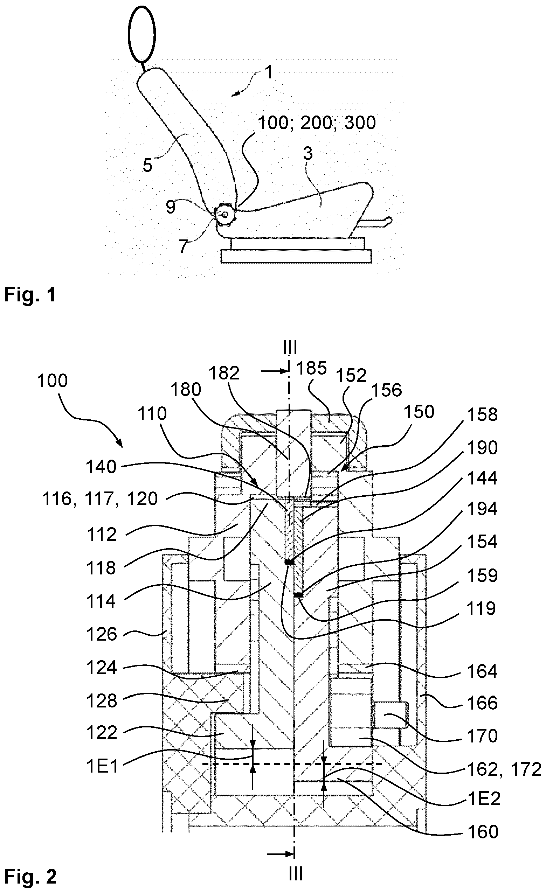

Ein in Figur 1 dargestellter Fahrzeugsitz 1 für ein Kraftfahrzeug weist ein Sitzteil 3 und eine relativ zum Sitzteil 3 in ihrer Neigung einstellbare Rückenlehne 5 auf. Zur Neigungseinstellung der Rückenlehne 5 wird eine Welle 7 gedreht, beispielsweise manuell mittels eines Handrades 9 oder motorisch, beispielsweise mittels eines Elektromotors. Die Welle 7 ist horizontal im Übergangsbereich zwischen dem Sitzteil 3 und der Rückenlehne 5 angeordnet. Auf beiden Seiten des Fahrzeugsitzes 1 greift die Welle 7 drehfest in jeweils einen Beschlag ein, von denen wenigstens einer als ein erfindungsgemäßer Getriebebeschlag 100 ausgebildet ist. Die Welle 7 und der wenigstens eine erfindungsgemäße Getriebebeschlag 100 sind Bestandteile eines Beschlagsystems zur Neigungseinstellung der Rückenlehne 5.

Die Welle 7 definiert die verwendeten Richtungsangaben eines Zylinderkoordinatensystems, dessen Ursprung im Zentrum der Welle 7 liegt. Insbesondere die Begriffe radial, axial, umlaufend und Umfangsrichtung sind auf dieses Zylinderkoordinatensystem bezogen.

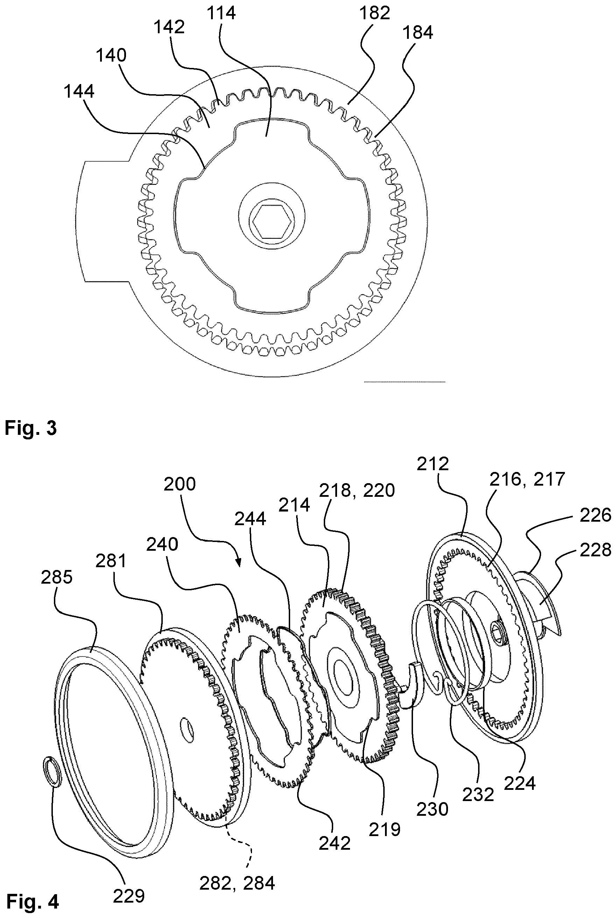

Die Figuren 2 und 3 zeigen einen erfindungsgemäßen Getriebebeschlag 100 gemäß eines ersten Ausführungsbeispiels. Die Figur 2 zeigt ausschnittsweise einen Schnitt durch den Getriebebeschlag 100. Insbesondere unterscheidet sich der Getriebebeschlag 100 gegenüber dem Stand der Technik durch ein zusätzliches Mittel zur Spielfreistellung.

Der Getriebebeschlag 100 weist einen ersten Einzelbeschlag 110 und einen zweiten Einzelbeschlag 150 auf, die axial unmittelbar nebeneinander angeordnet sind. Ein Drehen einer Welle 7 bewirkt ein synchrones Verstellen der beiden Einzelbeschläge 110; 150.

Der erste Einzelbeschlag 110 weist ein erstes Beschlagteil 112 und ein zweites Beschlagteil 114 auf. An dem ersten Beschlagteil 112 ist ein Zahnkranz 116 ausgebildet, der nachfolgend als erster Zahnkranz 116 bezeichnet ist. An dem zweiten Beschlagteil 114 ist ein Zahnrad 118 ausgebildet, das nachfolgend als erstes Zahnrad 118 bezeichnet ist.

Der erste Einzelbeschlag 110 ist als ein Getriebebeschlag ausgebildet, bei welchem das erste Beschlagteil 112 und das zweite Beschlagteil 114 mittels eines Getriebes zum Verstellen und Feststellen miteinander verbunden sind, genauer gesagt mittels eines - vorliegend selbsthemmenden - Exzenterumlaufgetriebes, wie es beispielsweise in der DE 10 2010 012 980 A1 beschrieben ist, deren diesbezüglicher Offenbarungsgehalt ausdrücklich einbezogen wird. Der erste Zahnkranz 116 des ersten Beschlagteils 112 und das erste Zahnrad 118 des zweiten Beschlagteils 114 sind Bestandteile des Exzenterumlaufgetriebes.

Der erste Zahnkranz 116 des ersten Beschlagteils 112 und das erste Zahnrad 118 des zweiten Beschlagteils 114 kämmen miteinander, d.h. sind lokal im Zahneingriff. Der Durchmesser eines Kopfkreises einer als eine Außenverzahnung ausgebildeten Verzahnung 120 des ersten Zahnrads 118 ist um wenigstens eine Zahnhöhe kleiner als der Durchmesser eines Fußkreises einer als eine Innenverzahnung ausgebildeten Verzahnung 117 des ersten Zahnkranzes 116. Ein entsprechender Unterschied der Zähnezahlen von erstem Zahnrad 118 und erstem Zahnkranz 116 von wenigstens einem Zahn ermöglicht eine taumelnde Abwälzbewegung des ersten Zahnkranzes 116 an dem ersten Zahnrad 118.

Das zweite Beschlagteil 114 weist einen Kragenzug 122 auf. Auf dem Kragenzug 122 sind zwei Keilsegmente mit ihren gekrümmten Innenflächen abgestützt, die mit ihren gekrümmten Außenflächen und unter Zwischenlage einer Gleitlagerbuchse 124 das erste Beschlagteil 112 lagern. Ein von der Welle 7 antreibbarer erster Mitnehmer 126 weist zwei mit Spiel zwischen die Schmalseiten der Keilsegmente fassende Mitnehmersegmente 128 auf und ist in radialer Richtung schwimmend in dem Kragenzug 122 gelagert. Die einander zugekehrten Breitseiten der Keilsegmente nehmen jeweils einen Endfinger einer Feder auf, welche die Keilsegmente in Umfangsrichtung auseinanderdrückt, so dass über die Keilgeometrie der Keilsegmente das Zahnrad 118 in Zahneingriff mit dem ersten Zahnkranz 116 gedrückt wird und Spiel im Bereich des Zahneingriffs zwischen dem ersten Zahnkranz 116 und dem ersten Zahnrad 118 reduziert wird.

Die Keilsegmente und die Feder bilden einen ersten Exzenter, welcher in Verlängerung der Richtung einer ersten Exzentrizität 1E1 das erste Zahnrad 118 an einer Eingriffsstelle in den Zahneingriff mit dem ersten Zahnkranz 116 drückt. Bei einem Antrieb der Welle 7, das heißt einer (insbesondere mehrfachen) Drehung der Welle 7 um deren Drehachse wird ein Drehmoment von der Welle 7 auf den ersten Mitnehmer 126 und mittels der Mitnehmersegmente 128 auf den ersten Exzenter übertragen, welcher unter Verlagerung der Richtung der ersten Exzentrizität 1E1 entlang der Gleitlagerbuchse 124 gleitet. Die erste Exzentrizität 1E1 läuft dadurch um, woraus eine umlaufende Verlagerung der Eingriffsstelle zwischen dem ersten Zahnrad 118 und dem ersten Zahnkranz 116 resultiert, was sich als taumelnde Abwälzbewegung darstellt, d.h. als eine Relativdrehung zwischen dem ersten Zahnrad 118 und dem ersten Zahnkranz 116 mit überlagerter Taumelbewegung.

Eine volle Drehung des ersten Exzenters bewirkt eine relative Drehung zwischen dem ersten Beschlagteil 112 und dem zweiten Beschlagteil 114 um einige Winkelgrade. Aufgrund der Drehung des ersten Exzenters ändern sich innerhalb des ersten Einzelbeschlags 110 Hebelarme und Abstützpunkte, woraus ein sinusförmig schwankender Drehmomentbedarf zum Antrieb des ersten Einzelbeschlags 110 resultiert.

Der zweite Einzelbeschlag 150 weist drittes Beschlagteil 152 und ein viertes Beschlagteil 154 auf. An dem dritten Beschlagteil 152 ist ein Zahnkranz 156 ausgebildet, der nachfolgend als zweiter Zahnkranz 156 bezeichnet ist. An dem vierten Beschlagteil 154 ist ein Zahnrad 158 ausgebildet, das nachfolgend als zweites Zahnrad 158 bezeichnet ist.

Die fortlaufenden Nummerierungen in den Bezeichnungen der Bauteile des zweiten Einzelbeschlags 150 (sowie des ersten Einzelbeschlags 110), wie beispielsweise "drittes" Beschlagteil 152 und "zweites" Zahnrad 158 beziehen sich auf den gesamten Getriebebeschlag 100, nicht auf die Einzelbeschläge 110; 150. So hat beispielsweise der zweite Einzelbeschlag 150 genau ein Zahnrad, nämlich das zweite Zahnrad 158 (von insgesamt zwei Zahnrädern 118; 158 des Getriebebeschlags 100).

Der zweite Einzelbeschlag 150 ist ebenfalls wie der erste Einzelbeschlag 110 als ein Getriebebeschlag ausgebildet, bei welchem das dritte Beschlagteil 152 und das vierte Beschlagteil 154 mittels eines selbsthemmenden Exzenterumlaufgetriebes miteinander verbunden sind. Hinsichtlich des Aufbaus und der Funktion entspricht der zweite Einzelbeschlag 150 dem ersten Einzelbeschlag 110.

Das vierte Beschlagteil 154, weist einen Kragenzug 160 auf. Auf dem Kragenzug 160 sind zwei Keilsegmente 162 abgestützt, die das dritte Beschlagteil 152 lagern. Die Keilsegmente 162 und eine Feder 170 bilden einen zweiten Exzenter 172, welcher in Verlängerung der Richtung einer zweiten Exzentrizität 1E2 das zweite Zahnrad 158 an einer Eingriffsstelle in Zahneingriff mit dem zweiten Zahnkranz 156 drückt und Spiel im Bereich des Zahneingriffs zwischen dem zweiten Zahnkranz 156 und dem zweiten Zahnrad 158 reduziert.

Bei einem Antrieb der Welle 7, das heißt einer (insbesondere mehrfachen) Drehung der Welle 7 um deren Drehachse, wird ein Drehmoment zunächst auf einen zweiten Mitnehmer 166 und mittels zweier Mitnehmersegmente des zweiten Mitnehmers 166 dann auf den zweiten Exzenter 172 übertragen, welcher unter Verlagerung der Richtung der zweiten Exzentrizität 1 E2 entlang einer Gleitlagerbuchse 164 gleitet. Die zweite Exzentrizität 1E2 läuft dadurch um, woraus eine umlaufende Verlagerung der Eingriffsstelle zwischen dem zweiten Zahnrad 158 und dem zweiten Zahnkranz 156 resultiert, was sich als taumelnde Abwälzbewegung darstellt, d.h. als eine Relativdrehung zwischen dem zweiten Zahnrad 158 und dem zweiten Zahnkranz 156 mit überlagerter Taumelbewegung.

Eine volle Drehung des zweiten Exzenters 172 bewirkt eine relative Drehung zwischen dem dritten Beschlagteil 152 und dem vierten Beschlagteil 154 um einige Winkelgrade. Aufgrund der Drehung des zweiten Exzenters 172 ändern sich innerhalb des zweiten Einzelbeschlags 150 Hebelarme und Abstützpunkte, woraus ein sinusförmig schwankender Drehmomentbedarf zum Antrieb des zweiten Einzelbeschlags 150 resultiert.

Die erste Exzentrizität 1E1 des ersten Einzelbeschlags 110 ist in Umfangsrichtung gedreht zu der zweiten Exzentrizität 1 E2 des zweiten Einzelbeschlags 150 angeordnet. Vorliegend beträgt ein Winkel zwischen der ersten Exzentrizität 1E1 des ersten Einzelbeschlags 110 und der zweiten Exzentrizität 1 E2 des zweiten Einzelbeschlags 150 genau 180 Grad. Dadurch ergibt sich zwischen dem Drehmomentbedarf zum Antrieb des ersten Einzelbeschlags 110 und dem Drehmomentbedarf zum Antrieb des zweiten Einzelbeschlags 150 eine Phasenverschiebung von 180 Grad. Die beiden sinusförmigen Drehmomentbedarfe addieren sich dadurch zu einem annähernd konstanten und linearen Verlauf eines Gesamtdrehmomentbedarfs zum Verstellen des Getriebebeschlags 100.

Das erste Beschlagteil 112 des ersten Einzelbeschlags 110 und das dritte Beschlagteil 152 des zweiten Einzelbeschlags 150 sind mittels wenigstens eines Adapters miteinander verbindbar oder verbunden. Mittels des wenigstens einen Adapters ist der Getriebebeschlag 100 mit einem Strukturbauteil des Fahrzeugsitzes 1, vorzugsweise einem Strukturbauteil des Sitzteils 3, verbindbar.

Das zweite Beschlagteil 114 des ersten Einzelbeschlags 110 und das vierte Beschlagteil 154 des zweiten Einzelbeschlags 150 sind jeweils kinematisch mit einem Übersetzungsverhältnis an ein gemeinsames Abtriebsmittel 180 gekoppelt. Dabei sind das zweite Beschlagteil 114 und das vierte Beschlagteil 154 jeweils in radialer Richtung zueinander begrenzt beweglich und in Umfangsrichtung über das Abtriebsmittel 180 kinematisch miteinander gekoppelt.

Das erste Zahnrad 118 und das zweite Zahnrad 158 sind mit einem Zahnkranz 182 des Abtriebsmittels 180, nachfolgend als dritter Zahnkranz 182 bezeichnet, jeweils lokal im Zahneingriff. Der Durchmesser des Kopfkreises der Verzahnungen von erstem Zahnrad 118 und zweitem Zahnrad 158 sind jeweils um wenigstens eine Zahnhöhe kleiner als der Durchmesser des Fußkreises der als Innenverzahnung ausgebildeten Verzahnung 184 des dritten Zahnkranzes 182. Ein entsprechender Unterschied der Zähnezahlen von erstem Zahnrad 118 und zweitem Zahnrad 158 einerseits und drittem Zahnkranz 182 andererseits von wenigstens einem Zahn ermöglicht jeweils eine taumelnde Abwälzbewegung des ersten Zahnrads 118 und des zweiten Zahnrads 158 in dem dritten Zahnkranz 182. Somit sind das erste Zahnrad 118 und das zweite Zahnrad 158 in Umfangsrichtung kinematisch an das Abtriebsmittel 180 gekoppelt.

Die Zähnezahlen der beiden Zahnräder 118, 158 sind identisch. Die Zähnezahl des dritten Zahnkranzes 182 und die Zähnezahl der beiden Zahnräder 118, 158 definieren zusammen mit den Zähnezahlen der beiden Zahnkränze 116, 156 ein Übersetzungsverhältnis.

Der dritte Zahnkranz 182 und somit das Abtriebsmittel 180 sind durch die Abwälzbewegungen von erstem Zahnrad 118 und zweitem Zahnrad 158 in dem dritten Zahnkranz 182 antreibbar. Aufgrund der zuvor beschriebenen Relativdrehungen mit jeweils überlagerten Taumelbewegungen des zweiten Beschlagteils 114 und des vierten Beschlagteils 154 und der zuvor beschriebenen Phasenverschiebung der Exzentrizitäten 1E1, 1E2 finden zwar synchrone Drehungen des zweiten Beschlagteils 114 und des vierten Beschlagteils 154 statt, jedoch sind die überlagerten Taumelbewegungen antizyklisch und durch das Abtriebsmittel 180 kompensiert. Die zuvor beschriebenen schwimmenden Lagerungen der beiden Mitnehmer 126, 166 in den Kragenzügen 120, 160 gewährleisten einen synchronen Antrieb der beiden Exzenter und somit der Abwälzbewegungen von erstem Zahnrad 118 und zweitem Zahnrad 158 in dem dritten Zahnkranz 182. Die beiden Mitnehmer 126, 166 sind vorliegend fest miteinander verbunden, insbesondere miteinander verclipst.

Das erste Beschlagteil 112 und das dritte Beschlagteil 152 können, insbesondere jeweils unter Zwischenlage eines Gleitlagerrings, an dem Abtriebsmittel 180 gelagert sein. Der erste Einzelbeschlag 110, der zweite Einzelbeschlag 150 und das Abtriebsmittel 180 sind in axialer Richtung mittels eines Umklammerungsrings 185 zueinander fixiert.

Das Abtriebsmittel 180 weist vorliegend einen radial abstehenden Befestigungsflansch auf, der mit einem Strukturbauteil des Fahrzeugsitzes 1, vorzugsweise einem Strukturbauteil der Rückenlehne 5, verbindbar ist.

Der Getriebebeschlag 100 weist als ein Mittel zur Spielfreistellung zwischen dem ersten Zahnrad 118 und dem dritten Zahnkranz 182 eine in radialer Richtung elastisch vorgespannte Scheibe 140 auf, die nachfolgend als erste Scheibe 140 bezeichnet ist. Ein radial äußerer Bereich der ersten Scheibe 140 liegt an dem dritten Zahnkranz 182 an. Die erste Scheibe 140 ist radial außen vorzugsweise derart verzahnt ausgeführt, das die erste Scheibe 140 radial außen in Zahneingriff mit dem dritten Zahnkranz 182 ist, und zwar in Umfangsrichtung in einem Bereich, in dem auch das erste Zahnrad 118 mit dem dritten Zahnkranz 182 in Zahneingriff ist. Radial innen weist die Scheibe 140 ein elastisches, ringförmiges Federelement 144 auf, das aus einem elastischen Material, beispielsweise Gummi, besteht. Das Federelement 144 stützt sich auf einer umlaufenden Stufe 119 in dem ersten Zahnrad 118 ab und spannt die Scheibe 140 in Richtung des Zahneingriffs mit dem dritten Zahnkranz 182 vor, wodurch im Bereich des Zahneingriffs ein Spiel zwischen dem ersten Zahnrad 118 und dem dritten Zahnkranz 182 reduziert oder eliminiert ist.

Der Getriebebeschlag 100 weist als ein Mittel zur Spielfreistellung zwischen dem zweiten Zahnrad 158 und dem dritten Zahnkranz 182 eine in radialer Richtung elastisch vorgespannte Scheibe 190 auf, die nachfolgend als zweite Scheibe 190 bezeichnet ist. Ein radial äußerer Bereich der zweiten Scheibe 190 liegt an dem dritten Zahnkranz 182 an. Die zweite Scheibe 190 ist radial außen vorzugsweise derart verzahnt ausgeführt, das die zweite Scheibe 190 radial außen in Zahneingriff mit dem dritten Zahnkranz 182 ist, und zwar in Umfangsrichtung in einem Bereich, in dem auch das zweite Zahnrad 158 mit dem dritten Zahnkranz 182 in Zahneingriff ist. Radial innen weist die Scheibe 190 ein elastisches, ringförmiges Federelement 194 auf, das aus einem elastischen Material, beispielsweise Gummi, besteht. Das Federelement 194 stützt sich auf einer umlaufenden Stufe 159 in dem zweiten Zahnrad 158 ab und spannt die zweite Scheibe 190 in Richtung des Zahneingriffs mit dem dritten Zahnkranz 182 vor, wodurch im Bereich des Zahneingriffs ein Spiel zwischen dem zweiten Zahnrad 158 und dem dritten Zahnkranz 182 reduziert oder eliminiert ist.

In den nachfolgend beschriebenen beiden Ausführungsbeispielen entfällt der zweite Einzelbeschlag, so dass der Getriebebeschlag 200, 300 genau zwei Zahnkränze 216, 282; 316, 382 und genau ein Zahnrad 218; 318 aufweist.

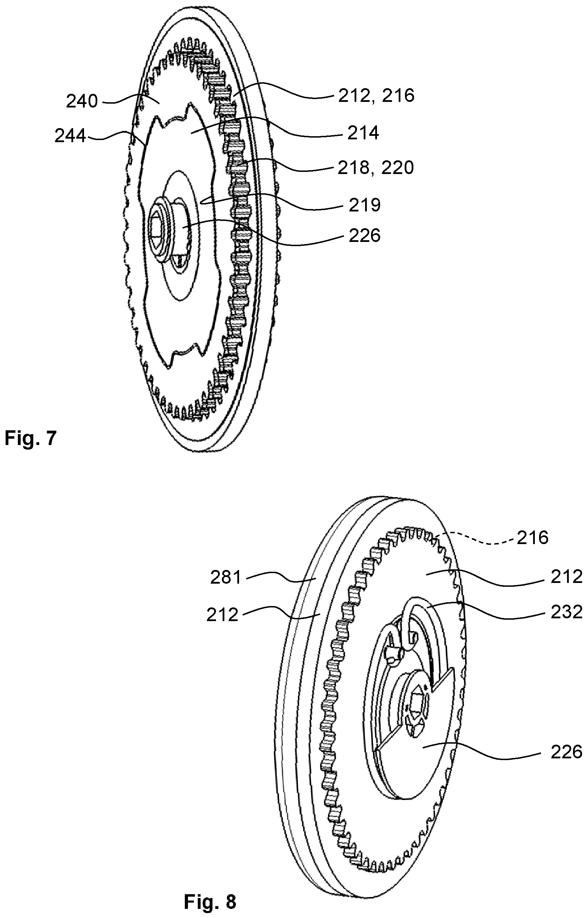

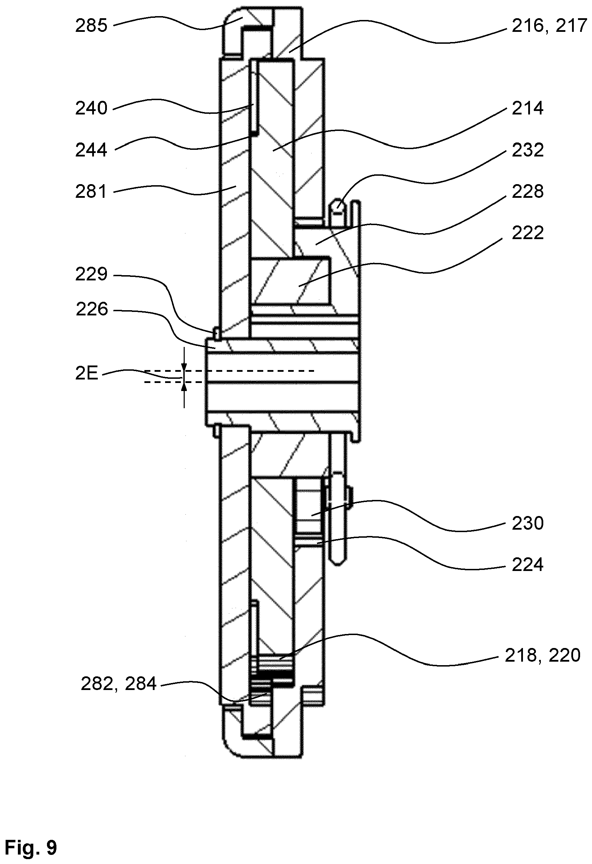

Die Figuren 4 bis 9 zeigen einen erfindungsgemäßen Getriebebeschlag 200 gemäß eines zweiten Ausführungsbeispiels.

Der Getriebebeschlag 200 weist ein erstes Beschlagteil 212 und ein zweites Beschlagteil 214 auf. An dem ersten Beschlagteil 212 ist ein Zahnkranz 216 ausgebildet, der nachfolgend als erster Zahnkranz 216 bezeichnet ist. Das zweite Beschlagteil 214 ist als ein Zahnrad 218 ausgebildet.

Das erste Beschlagteil 212 und das zweite Beschlagteil 214 sind mittels eines Getriebes zum Verstellen und Feststellen miteinander verbunden, genauer gesagt mittels eines - vorliegend selbsthemmenden - Exzenterumlaufgetriebes, wie es beispielsweise in der DE 10 2010 012 980 A1 beschrieben ist, deren diesbezüglicher Offenbarungsgehalt ausdrücklich einbezogen wird. Der erste Zahnkranz 216 des ersten Beschlagteils 212 und das Zahnrad 218 des zweiten Beschlagteils 214 sind Bestandteile des Exzenterumlaufgetriebes.

Der erste Zahnkranz 216 des ersten Beschlagteils 212 und das Zahnrad 218 des zweiten Beschlagteils 214 kämmen miteinander, d.h. sind lokal im Zahneingriff. Der Durchmesser eines Kopfkreises einer als eine Außenverzahnung ausgebildeten Verzahnung 220 des Zahnrads 218 ist um wenigstens eine Zahnhöhe kleiner als der Durchmesser eines Fußkreises einer als eine Innenverzahnung ausgebildeten Verzahnung 217 des ersten Zahnkranzes 216. Ein entsprechender Unterschied der Zähnezahlen von Zahnrad 218 und erstem Zahnkranz 216 von wenigstens einem Zahn ermöglicht eine taumelnde Abwälzbewegung des ersten Zahnkranzes 216 an dem Zahnrad 218.

Das zweite Beschlagteil 214 weist einen Kragenzug 222 auf. Auf dem Kragenzug 222 sind zwei Keilsegmente 230 mit ihren gekrümmten Innenflächen abgestützt, die mit ihren gekrümmten Außenflächen und unter Zwischenlage einer Gleitlagerbuchse 224 das erste Beschlagteil 212 lagern. Ein von der Welle 7 antreibbarer erster Mitnehmer 226 weist zwei mit Spiel zwischen die Schmalseiten der Keilsegmente 230 fassende Mitnehmersegmente 228 auf. Der Mitnehmer 226 ist axial durch ein Axialsicherungselement 229 gesichert, der auf einen zylindrischen Teil des Mitnehmers 226 aufgeclipst ist. In den zylindrischen Teil des Mitnehmers 226 ist die Welle 7 drehfest einführbar. Zwischen dem Axialsicherungselement 229 und dem dritten Beschlagteil 281 ist eine in den Figuren nicht dargestellte Abdeckscheibe angeordnet.

Die einander zugekehrten Breitseiten der Keilsegmente 230 nehmen jeweils einen Endfinger einer Feder 232 auf, welche die Keilsegmente 230 in Umfangsrichtung auseinanderdrückt, so dass über die Keilgeometrie der Keilsegmente 230 das Zahnrad 218 in Zahneingriff mit dem Zahnkranz 216 gedrückt wird und Spiel im Bereich des Zahneingriffs zwischen dem ersten Zahnkranz 216 und dem Zahnrad 218 reduziert wird.

Die Keilsegmente 230 und die Feder 232 bilden einen Exzenter, welcher in Verlängerung der Richtung einer Exzentrizität 2E das Zahnrad 218 an einer Eingriffsstelle in den Zahneingriff mit dem ersten Zahnkranz 216 drückt. Bei einem Antrieb der Welle 7, das heißt einer (insbesondere mehrfachen) Drehung der Welle 7 um deren Drehachse wird ein Drehmoment von der Welle 7 auf den ersten Mitnehmer 226 und mittels der Mitnehmersegmente 228 auf den ersten Exzenter übertragen, welcher unter Verlagerung der Richtung der Exzentrizität 2E entlang der Gleitlagerbuchse 224 gleitet. Die Exzentrizität 2E läuft dadurch um, woraus eine umlaufende Verlagerung der Eingriffsstelle zwischen dem Zahnrad 218 und dem ersten Zahnkranz 216 resultiert, was sich als taumelnde Abwälzbewegung darstellt, d.h. als eine Relativdrehung zwischen dem Zahnrad 218 und dem ersten Zahnkranz 216 mit überlagerter Taumelbewegung. Eine volle Drehung des ersten Exzenters bewirkt eine relative Drehung zwischen dem ersten Beschlagteil 212 und dem zweiten Beschlagteil 214 um einige Winkelgrade.

Das Zahnrad 218 ist mit einem weiteren, das heißt im vorliegenden Fall einem zweiten, an einem als Abtrieb wirksamen dritten Beschlagteil 281 ausgebildeten Zahnkranz 282 lokal im Zahneingriff. Der Durchmesser des Kopfkreises der Verzahnung 220 des Zahnrads 218 ist um wenigstens eine Zahnhöhe kleiner als der Durchmesser eines Fußkreises einer als Innenverzahnung ausgebildeten Verzahnung 284 des weiteren Zahnkranzes 282. Ein entsprechender Unterschied der Zähnezahlen von Zahnrad 218 und weiterem Zahnkranz 282 von wenigstens einem Zahn ermöglicht eine taumelnde Abwälzbewegung des Zahnrads 218 in dem weiteren Zahnkranz 282.

Die Zähnezahl des weiteren Zahnkranzes 282 und die Zähnezahl des Zahnrads 218 definieren zusammen mit der Zähnezahl des ersten Zahnkranzes 216 ein Übersetzungsverhältnis.

Das dritte Beschlagteil 281 und das erste Beschlagteil 212 sind in axialer Richtung und in radialer Richtung mittels eines Umklammerungsrings 285 zueinander fixiert. Vorzugsweise ist ein zylindrischer Abschnitt stumpf mit einem äußeren Bereich des ersten Beschlagteils 212 verschweißt. Das dritte Beschlagteil 281 ist in dem Umklammerungsring 285 drehbar gelagert und axial fixiert.

Das dritte Beschlagteil 281 kann einen in den Figuren nicht dargestellten, insbesondere radial abstehenden Befestigungsflansch aufweisen, der mit einem Strukturbauteil des Fahrzeugsitzes 1, vorzugsweise einem Strukturbauteil der Rückenlehne 5, verbindbar ist.

Der Getriebebeschlag 200 weist als ein Mittel zur Spielfreistellung zwischen dem Zahnrad 218 und dem weiteren Zahnkranz 282 eine in radialer Richtung elastisch vorgespannte Scheibe 240 auf. Die Scheibe 240 ist mit dem weiteren Zahnkranz 282 in Zahneingriff. Die Scheibe 240 weist dazu radial außen eine Verzahnung 242 auf, die mit dem weiteren Zahnkranz 282 in Zahneingriff ist, und zwar in Umfangsrichtung in einem Bereich, in dem auch das Zahnrad 218 mit dem weiteren Zahnkranz 282 in Zahneingriff ist.

Radial innen ist die Scheibe 240 unter Zwischenlage eines elastischen, ringförmigen Federelements 244, das aus einem elastischen Material, beispielsweise Gummi, besteht, auf einer umlaufenden Stufe 219 des Zahnrads 218 abgestützt. Das Federelement 244 stützt sich auf der umlaufenden Stufe 219 an dem Zahnrad 218 ab und spannt die Scheibe 240 in Richtung des Zahneingriffs mit dem weiteren Zahnkranz 282 vor, wodurch im Bereich des Zahneingriffs ein Spiel zwischen dem Zahnrad 218 und dem weiteren Zahnkranz 282 reduziert oder eliminiert ist.

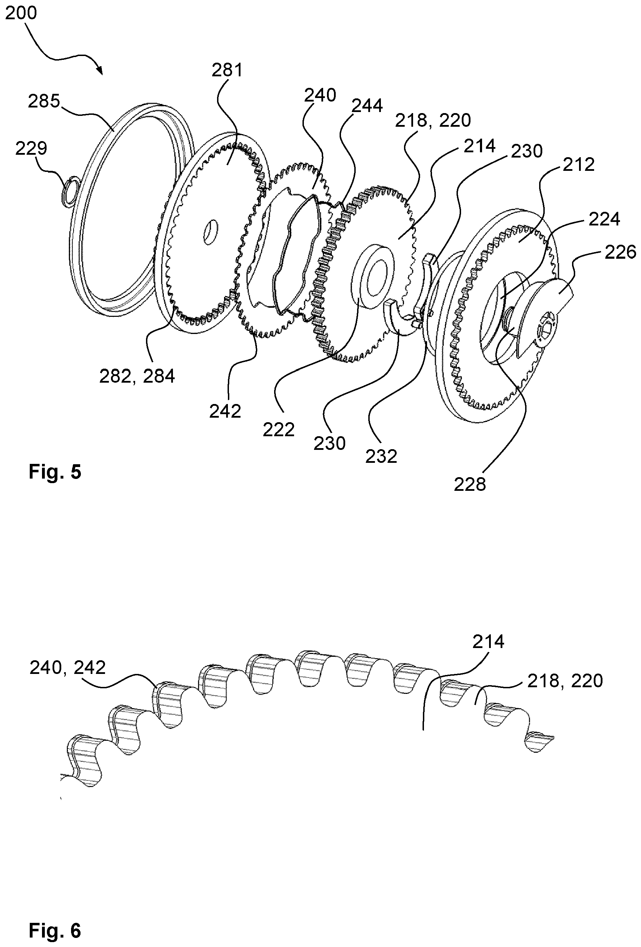

Wie insbesondere in Fig. 6 erkennbar, steht in einem entspannten Zustand der Scheibe 240 ein radial äußerer Bereich der Verzahnung 242 der Scheibe 240 radial über einen radial äußeren Bereich der Verzahnung 220 des Zahnrads 218 über. Ein Kopfkreisradius der Verzahnung 242 der Scheibe 240 ist größer als ein Kopfkreisradius der Verzahnung 220 des Zahnrads 218. Dadurch kann die Scheibe 240 ein Spiel in radialer Richtung zwischen dem Zahnrad 218 und dem weiteren Zahnkranz 282 ausgleichen.

Eine Zahndicke der Verzahnung 242 der Scheibe 240 ist größer als eine Zahndicke der Verzahnung 220 des Zahnrads 218 ist. Dadurch kann die Scheibe 240 zusätzlich auch Spiel in Umfangsrichtung zwischen dem Zahnrad 218 und dem weiteren Zahnkranz 282 ausgleichen.

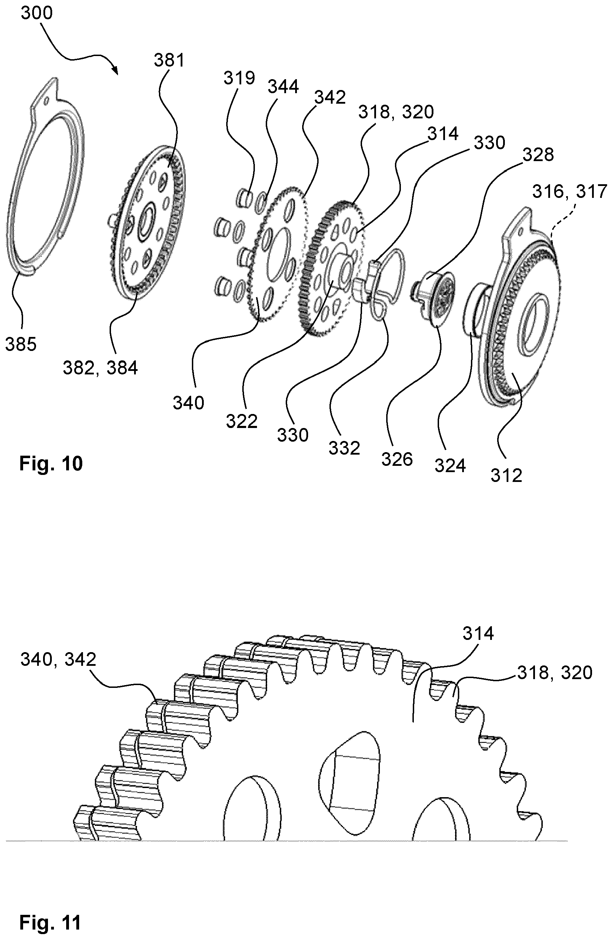

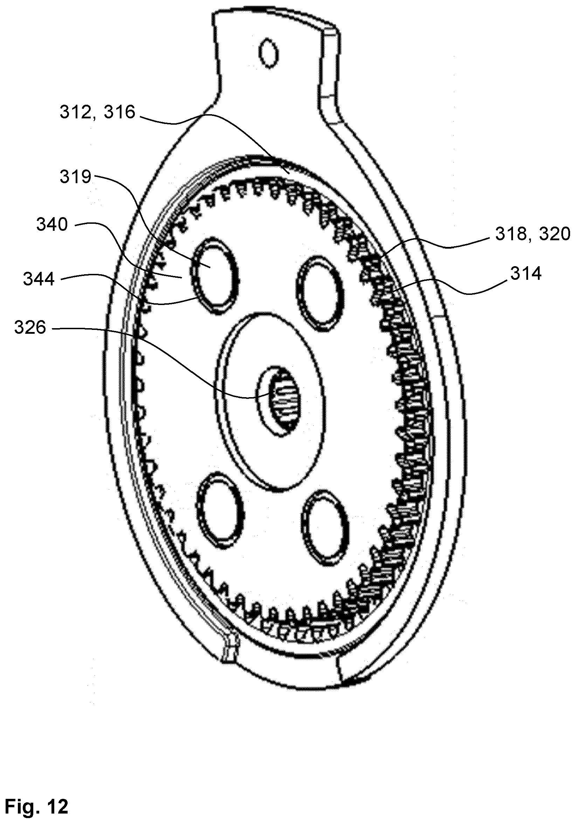

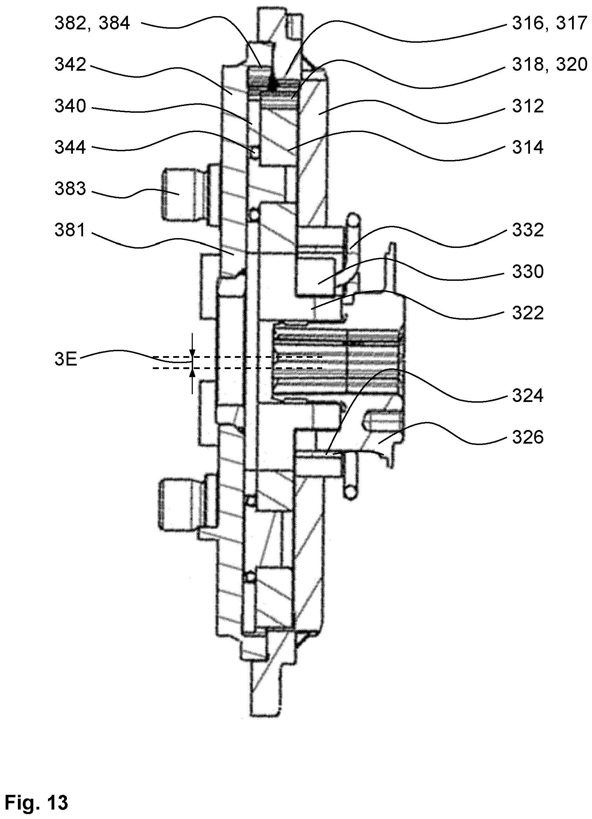

Die Figuren 10 bis 13 zeigen einen erfindungsgemäßen Getriebebeschlag 300 gemäß eines dritten Ausführungsbeispiels. Der Getriebebeschlag 300 entspricht hinsichtlich seines Aufbaus und seiner Funktion dem zuvor beschriebenen Getriebebeschlag 200, sofern dies nachfolgend nicht abweichend beschrieben ist.

Der Getriebebeschlag 300 weist ein erstes Beschlagteil 312 und ein zweites Beschlagteil 314 auf. An dem ersten Beschlagteil 312 ist ein Zahnkranz 316 ausgebildet, der nachfolgend als erster Zahnkranz 316 bezeichnet ist. Das zweite Beschlagteil 314 weist ein Zahnrad 318 auf. Das zweite Beschlagteil 314 ist vorliegend als ein Zahnrad 318 ausgebildet.

Der erste Zahnkranz 316 des ersten Beschlagteils 312 und das Zahnrad 318 des zweiten Beschlagteils 314 kämmen miteinander, d.h. sind lokal im Zahneingriff. Der Durchmesser eines Kopfkreises einer als eine Außenverzahnung ausgebildeten Verzahnung 320 des Zahnrads 318 ist um wenigstens eine Zahnhöhe kleiner als der Durchmesser eines Fußkreises einer als eine Innenverzahnung ausgebildeten Verzahnung 317 des ersten Zahnkranzes 316. Ein entsprechender Unterschied der Zähnezahlen von Zahnrad 318 und erstem Zahnkranz 316 von wenigstens einem Zahn ermöglicht eine taumelnde Abwälzbewegung des ersten Zahnkranzes 316 an dem Zahnrad 318.

Das zweite Beschlagteil 314 weist einen Kragenzug 322 auf. Auf dem Kragenzug 322 sind zwei Keilsegmente 330 mit ihren gekrümmten Innenflächen abgestützt, die mit ihren gekrümmten Außenflächen und unter Zwischenlage einer Gleitlagerbuchse 324 das erste Beschlagteil 312 lagern. Ein von der Welle 7 antreibbarer erster Mitnehmer 326 weist zwei mit Spiel zwischen die Schmalseiten der Keilsegmente 330 fassende Mitnehmersegmente 328 auf. Die einander zugekehrten Breitseiten der Keilsegmente 330 nehmen jeweils einen Endfinger einer Feder 332 auf, welche die Keilsegmente 330 in Umfangsrichtung auseinanderdrückt, so dass über die Keilgeometrie der Keilsegmente 330 das Zahnrad 318 in Zahneingriff mit dem ersten Zahnkranz 316 gedrückt wird und Spiel im Bereich des Zahneingriffs zwischen dem ersten Zahnkranz 316 und dem Zahnrad 318 reduziert wird.

Die Keilsegmente 330 und die Feder 332 bilden einen Exzenter, welcher in Verlängerung der Richtung einer Exzentrizität 3E das Zahnrad 318 an einer Eingriffsstelle in den Zahneingriff mit dem ersten Zahnkranz 316 drückt. Bei einem Antrieb der Welle 7 erfolgt wie zuvor beschrieben eine Relativdrehung zwischen dem Zahnrad 318 und dem ersten Zahnkranz 316 mit überlagerter Taumelbewegung.

Das Zahnrad 318 ist mit einem weiteren, an einem dritten Beschlagteil 381 ausgebildeten, Zahnkranz 382 lokal im Zahneingriff. Das dritte Beschlagteil 381 weist mehrere Befestigungsbolzen 383 auf, die mit einem Strukturbauteil des Fahrzeugsitzes 1, vorzugsweise einem Strukturbauteil des Sitzteils 3, verbindbar sind.

Der Durchmesser des Kopfkreises der Verzahnung 320 des Zahnrads 318 ist um wenigstens eine Zahnhöhe kleiner als der Durchmesser eines Fußkreises einer als Innenverzahnung ausgebildeten Verzahnung 384 des weiteren Zahnkranzes 382. Ein entsprechender Unterschied der Zähnezahlen von Zahnrad 318 und weiterem Zahnkranz 382 von wenigstens einem Zahn ermöglicht eine taumelnde Abwälzbewegung des Zahnrads 318 in dem weiteren Zahnkranz 382.

Das dritte Beschlagteil 381 und das erste Beschlagteil 312 sind in axialer Richtung und in radialer Richtung mittels eines Umklammerungsrings 385 zueinander fixiert. Das erste Beschlagteil 312 und der Umklammerungsring 385 weisen jeweils einen radial abstehenden Befestigungsflansch auf, der mit einem Strukturbauteil des Fahrzeugsitzes 1, vorzugsweise einem Strukturbauteil der Rückenlehne 5, verbindbar ist.

Der Getriebebeschlag 300 weist als ein Mittel zur Spielfreistellung zwischen dem Zahnrad 318 und dem weiteren Zahnkranz 382 eine in radialer Richtung elastisch vorgespannte Scheibe 340 auf. Die Scheibe 340 ist mit dem weiteren Zahnkranz 382 in Zahneingriff. Die Scheibe 340 weist dazu radial außen eine Verzahnung 342 auf, die mit dem weiteren Zahnkranz 382 in Zahneingriff ist, und zwar in Umfangsrichtung in einem Bereich, in dem auch das Zahnrad 318 mit dem weiteren Zahnkranz 382 in Zahneingriff ist.

Die Scheibe 340 ist mittels vier Bolzen 319 und vier ringförmigen Federelementen 344 an dem Zahnrad 318 radial abgestützt. Die vier Bolzen 319 sind über den Umfang verteilt an dem Zahnrad 318 befestigt, beispielsweise in Öffnungen des Zahnrads 318 eingepresst. Jeweils ein elastisches ringförmiges Federelement 344 ist auf jeweils einen der Bolzen 319 aufgeschoben. Die Scheibe 340 weist vier mit den Bolzen 319 fluchtende Löcher auf, durch die die vier Bolzen 319 samt der Federelemente 344 durchgesteckt sind. Unter elastischer Deformation der Federelemente 344 ist die Scheibe 340 in alle Richtungen begrenzt radial beweglich relativ zu dem Zahnrad 318.

Wie insbesondere in Fig. 11 erkennbar, steht in einem entspannten Zustand der Scheibe 340 ein radial äußerer Bereich der Verzahnung 342 der Scheibe 340 radial über einen radial äußeren Bereich der Verzahnung 320 des Zahnrads 318 über. Ein Kopfkreisradius der Verzahnung 342 der Scheibe 340 ist größer als ein Kopfkreisradius der Verzahnung 320 des Zahnrads 318. Dadurch kann die Scheibe 340 ein Spiel in radialer Richtung zwischen dem Zahnrad 318 und dem weiteren Zahnkranz 382 ausgleichen.

Eine Zahndicke der Verzahnung 342 der Scheibe 340 ist größer als eine Zahndicke der Verzahnung 320 des Zahnrads 318 ist. Dadurch kann die Scheibe 340 zusätzlich auch Spiel in Umfangsrichtung zwischen dem Zahnrad 318 und dem weiteren Zahnkranz 382 ausgleichen.

Die Verzahnung 342 der Scheibe 340 ist in Umfangsrichtung geringfügig verdreht zur Verzahnung 320 des Zahnrads 318. Dadurch ist jeweils eine Zahnflanke eines jeden Zahns der Verzahnung 342 der Scheibe 340 in axialer Richtung bündig mit jeweils einer Zahnflanke eines Zahns der Verzahnung 320 des Zahnrads 318. Die jeweils zweite Zahnflanke eines jeden Zahns der Verzahnung 342 der Scheibe 340 steht in Umfangsrichtung über die Zahnflanke des zugeordneten Zahns der Verzahnung 320 des Zahnrads 318 über.

### Bezugszeichenliste

- 1: Fahrzeugsitz
- 3: Sitzteil
- 5: Rückenlehne
- 7: Welle
- 9: Handrad

- 100; 200; 300: Getriebebeschlag
- 110: erster Einzelbeschlag
- 112; 212; 312: erstes Beschlagteil
- 114; 214; 314: zweites Beschlagteil
- 116; 216; 316: erster Zahnkranz
- 117; 217; 317: Verzahnung
- 118; 218; 318: (erstes) Zahnrad
- 119; 219: Stufe
319 Bolzen

- 120; 220; 320: Verzahnung
- 122; 222; 322: Kragenzug
- 124; 224; 324: Gleitlagerbuchse
- 126; 226; 326: (erster) Mitnehmer
- 128; 228; 328: Mitnehmersegment
229 Axialsicherungselement
230; 330 Keilsegment
232; 332 Feder

- 140; 240; 340: Scheibe
- 142; 242; 342: Verzahnung
- 144; 244; 344: Federelement
- 150: zweiter Einzelbeschlag
- 152: drittes Beschlagteil
- 154: viertes Beschlagteil
- 156: zweiter Zahnkranz
- 158: zweites Zahnrad
- 159: Stufe
- 160: Kragenzug
- 162: Keilsegment
- 164: Gleitlagerbuchse
- 166: zweiter Mitnehmer
- 170: Feder
- 172: zweiter Exzenter
- 180: Abtriebsmittel
281; 381 drittes Beschlagteil

- 182; 282; 382: weiterer (dritter) Zahnkranz
383 Befestigungsbolzen

- 184; 284; 384: Verzahnung
- 185; 285; 385: Umklammerungsring
- 190: Scheibe
- 194: Federelement
- 1E1: erste Exzentrizität
- 1E2: zweite Exzentrizität
2E; 3E Exzentrizität

## Patentansprüche

1. Getriebebeschlag (100; 200; 300) für einen Fahrzeugsitz (1), insbesondere Kraftfahrzeugsitz, aufweisend einen ersten Zahnkranz (116; 216; 316), ein den ersten Zahnkranz (116; 216; 316) kämmendes Zahnrad (118; 218; 318), einen von dem Zahnrad (118; 218; 318) gekämmten weiteren Zahnkranz (182; 282; 382), und einen drehbaren Exzenter zum Antrieb einer relativen Abwälzbewegung zwischen dem Zahnrad (118; 218; 318) und dem ersten Zahnkranz (116; 216; 316),
**gekennzeichnet durch** ein Mittel zur Spielfreistellung zwischen dem Zahnrad (118; 218; 318) und dem weiteren Zahnkranz (182; 282; 382), wobei das elastisch vorspannbare Mittel eine Scheibe (140; 240; 340) ist, die gegen den weiteren Zahnkranz (182; 282; 382) vorspannbar ist und die Scheibe (140; 240; 340) radial innen einen nachgiebigeren Werkstoff aufweist als radial außen.

2. Getriebebeschlag (100; 200; 300) nach Anspruch 1, **dadurch gekennzeichnet, dass** zur Spielfreistellung zwischen dem Zahnrad (118; 218; 318) und dem weiteren Zahnkranz (182; 282; 382) das elastisch vorspannbare Mittel in radialer Richtung vorspannbar ist.

3. Getriebebeschlag (200; 300) nach Anspruch 1 oder 2, **dadurch gekennzeichnet, dass** zur Spielfreistellung zwischen dem Zahnrad (218; 318) und dem weiteren Zahnkranz (282; 382) das elastisch vorspannbare Mittel in Umfangsrichtung vorspannbar ist.

4. Getriebebeschlag (100; 200; 300) nach einem der Ansprüche 1 bis 3, **dadurch gekennzeichnet, dass** das elastisch vorspannbare Mittel in einem montierten Zustand des Getriebebeschlags (100; 200; 300) dauerhaft elastisch vorgespannt ist.

5. Getriebebeschlag (100; 200) nach einem der Ansprüche 1 bis 4, **dadurch gekennzeichnet, dass** ein radial innerer Bereich der Scheibe (140; 240), insbesondere unter Zwischenlage wenigstens eines Federelements (144; 244), auf einer Stufe (119; 219) des Zahnrads (118; 218) abgestützt ist.

6. Getriebebeschlag (300) nach einem der Ansprüche 1 bis 4, **dadurch gekennzeichnet, dass** die Scheibe (340), insbesondere unter Zwischenlage wenigstens eines Federelements (344), auf wenigstens einem mit dem Zahnrad (318) verbundenen Mittel, insbesondere wenigstens einem mit dem Zahnrad (318) verbundenen Bolzen (319), abgestützt ist.

7. Getriebebeschlag (100; 200; 300) nach einem der Ansprüche 1 bis 6, **dadurch gekennzeichnet, dass** ein radial äußerer Bereich der Scheibe (140; 240; 340) radial über einen radial äußeren Bereich des Zahnrads (118; 218; 318) übersteht.

8. Getriebebeschlag (100; 200; 300) nach einem der Ansprüche 1 bis 7, **dadurch gekennzeichnet, dass** die Scheibe (140; 240; 340) radial außen eine Verzahnung (142; 242; 342) aufweist, die im Zahneingriff mit einer Verzahnung (184; 284; 384) des Weiteren Zahnkranzes (182; 282; 382) ist.

9. Getriebebeschlag (1100; 200; 300) nach Anspruch 8, **dadurch gekennzeichnet, dass** ein Kopfkreisradius der Verzahnung (142; 242; 342) der Scheibe (140; 240; 340) größer als ein Kopfkreisradius einer Verzahnung (120; 220; 320) des Zahnrads (118) ist.

10. Getriebebeschlag (100; 200; 300) nach Anspruch 8 oder 9, **dadurch gekennzeichnet, dass** eine Zahndicke der Verzahnung (142; 242; 342) der Scheibe (140) größer als eine Zahndicke der Verzahnung (120; 220; 320) des Zahnrads (118) ist.

11. Getriebebeschlag (300) nach einem der Ansprüche 8 bis 10, **dadurch gekennzeichnet, dass** die Verzahnung (342) der Scheibe (340) in Umfangsrichtung verdreht zur Verzahnung (320) des Zahnrads (318) ist.

12. Getriebebeschlag (300) nach Anspruch 11, **dadurch gekennzeichnet, dass** jeweils eine Zahnflanke eines jeden Zahns der Verzahnung (342) der Scheibe (340) in axialer Richtung bündig mit jeweils einer Zahnflanke eines Zahns der Verzahnung (320) des Zahnrads (318) ist.

13. Fahrzeugsitz (1) mit einem Sitzteil (3) und einer Rückenlehne (5), die mittels wenigstens eines Getriebebeschlags (100; 200; 300) nach einem der Ansprüche 1 bis 12 um eine Lehnenschwenkachse einstellbar an dem Sitzteil (3) angelenkt ist.

## Claims

1. Geared fitting (100; 200; 300) for a vehicle seat (1), in particular motor vehicle seat, having a first gear ring (116; 216; 316), a gear wheel (118; 218; 318) meshing with the first gear ring (116; 216; 316), a further gear ring (182; 282; 382) in which the gear wheel (118; 218; 318) is meshed, and a rotatable eccentric for driving a relative rolling movement between the gear wheel (118; 218; 318) and the first gear ring (116; 216; 316), **characterized by** a means for eliminating play between the gear wheel (118; 218; 318) and the further gear ring (182; 282; 382), wherein the elastically prestressable means is a washer (140; 240; 340) which can be prestressed against the further gear ring (182; 282; 382), and the washer (140; 240; 340) comprises a more flexible material radially on the inside than radially on the outside.

2. Geared fitting (100; 200; 300) according to Claim 1, **characterized in that**, for eliminating play between the gear wheel (118; 218; 318) and the further gear ring (182; 282; 382), the elastically prestressable means can be prestressed in the radial direction.

3. Geared fitting (200; 300) according to Claim 1 or 2, **characterized in that**, for eliminating play between the gear wheel (218; 318) and the further gear ring (282; 382), the elastically prestressable means can be prestressed in the circumferential direction.

4. Geared fitting (100; 200; 300) according to one of Claims 1 to 3, **characterized in that** the elastically prestressable means is permanently prestressed elastically in a mounted state of the geared fitting (100; 200; 300).

5. Geared fitting (100; 200) according to one of Claims 1 to 4, **characterized in that** a radially inner region of the washer (140; 240) is supported, in particular with the interposition of at least one spring element (144; 244), on a step (119; 219) of the gear wheel (118; 218).

6. Geared fitting (300) according to one of Claims 1 to 4, **characterized in that** the washer (340) is supported, in particular with the interposition of at least one spring element (344), on at least one means connected to the gear wheel (318), in particular at least one bolt (319) connected to the gear wheel (318).

7. Geared fitting (100; 200; 300) according to one of Claims 1 to 6, **characterized in that** a radially outer region of the washer (140; 240; 340) protrudes radially over a radially outer region of the gear wheel (118; 218; 318).

8. Geared fitting (100; 200; 300) according to one of Claims 1 to 7, **characterized in that** the washer (140; 240; 340) has, radially on the outside, a toothing (142; 242; 342) which is in toothed engagement with a toothing (184; 284; 384) of the further gear ring (182; 282; 382).

9. Geared fitting (100; 200; 300) according to Claim 8, **characterized in that** an addendum circle radius of the toothing (142; 242; 342) of the washer (140; 240; 340) is larger than an addendum circle radius of a toothing (120; 220; 320) of the gear wheel (118) .

10. Geared fitting (100; 200; 300) according to Claim 8 or 9, **characterized in that** a tooth thickness of the toothing (142; 242; 342) of the washer (140) is greater than a tooth thickness of the toothing (120; 220; 320) of the gear wheel (118).

11. Geared fitting (300) according to one of Claims 8 to 10, **characterized in that** the toothing (342) of the washer (340) is rotated in the circumferential direction with respect to the toothing (320) of the gear wheel (318).

12. Geared fitting (300) according to Claim 11, **characterized in that** one tooth flank of each tooth of the toothing (342) of the washer (340) is flush in the axial direction with in each case one tooth flank of a tooth of the toothing (320) of the gear wheel (318).

13. Vehicle seat (1) with a seat part (3) and a backrest (5) which is coupled to the seat part (3) so as to be adjustable about a backrest pivot axis by means of at least one geared fitting (100; 200; 300) according to one of Claims 1 to 12.

## Revendications

1. Ferrure à engrenage (100 ; 200 ; 300) pour un siège de véhicule (1), en particulier un siège de véhicule automobile, présentant une première couronne dentée (116 ; 216 ; 316), une roue dentée (118 ; 218 ; 316) engrenant la première couronne dentée (116 ; 216 ; 316) ; 318), une autre couronne dentée (182 ; 282 ; 382) engrenant avec la roue dentée (118 ; 218 ; 318), et un excentrique rotatif pour entraîner un mouvement de roulement relatif entre la roue dentée (118 ; 218 ; 318) et la première couronne dentée (116 ; 216 ; 316),
**caractérisée par** un moyen permettant de réduire le jeu entre la roue dentée (118 ; 218 ; 318) et l'autre couronne dentée (182 ; 282 ; 382), le moyen pouvant être précontraint élastiquement étant un disque (140 ; 240 ; 340) qui est apte à être précontraint contre l'autre couronne dentée (182 ; 282 ; 382) et le disque (140 ; 240 ; 340) présentant radialement à l'intérieur un matériau plus souple que radialement à l'extérieur.

2. Ferrure à engrenage (100 ; 200 ; 300) selon la revendication 1, **caractérisée en ce que** le moyen apte à être précontraint élastiquement est apte à être précontraint dans la direction radiale pour la position de jeu libre entre la roue dentée (118 ; 218 ; 318) et l'autre couronne dentée (182 ; 282 ; 382).

3. Ferrure à engrenage (200 ; 300) selon la revendication 1 ou 2, **caractérisée en ce que** le moyen apte à être précontraint élastiquement est apte à être précontraint dans la direction circonférentielle pour la position de jeu libre entre la roue dentée (218 ; 318) et l'autre couronne dentée (282 ; 382).

4. Ferrure à engrenage (100 ; 200 ; 300) selon l'une des revendications 1 à 3, **caractérisée en ce que** le moyen apte à être précontraint élastiquement est précontraint élastiquement de manière permanente dans un état monté de la ferrure à engrenage (100 ; 200 ; 300).

5. Ferrure à engrenage (100 ; 200) selon l'une des revendications 1 à 4, **caractérisée en ce qu'**une zone radialement intérieure du disque (140 ; 240) s'appuie sur un étage (119 ; 219) de la roue dentée (118 ; 218), en particulier avec interposition d'au moins un élément élastique (144 ; 244).

6. Ferrure à engrenage (300) selon l'une des revendications 1 à 4, **caractérisée en ce que** le disque (340) s'appuie, notamment avec interposition d'au moins un élément élastique (344), sur au moins un moyen relié à la roue dentée (318), notamment au moins un boulon (319) relié à la roue dentée (318).

7. Ferrure à engrenage (100 ; 200 ; 300) selon l'une des revendications 1 à 6, **caractérisée en ce qu'**une zone radialement extérieure du disque (140 ; 240 ; 340) fait saillie radialement au-delà d'une zone radialement extérieure de la roue dentée (118 ; 218 ; 318).

8. Ferrure à engrenage (100 ; 200 ; 300) selon l'une des revendications 1 à 7, **caractérisée en ce que** le disque (140 ; 240 ; 340) présente radialement à l'extérieur une denture (142 ; 242 ; 342) qui est en prise avec une denture (184 ; 284 ; 384) de ladite autre couronne dentée (182 ; 282 ; 382).

9. Ferrure à engrenage (100 ; 200 ; 300) selon la revendication 8, **caractérisée en ce qu'**un rayon de cercle de tête de la denture (142 ; 242 ; 342) du disque (140 ; 240 ; 340) est supérieur à un rayon de cercle de tête d'une denture (120 ; 220 ; 320) de la roue dentée (118).

10. Ferrure à engrenage (100 ; 200 ; 300) selon la revendication 8 ou 9, **caractérisée en ce qu'**une épaisseur de dent de la denture (142 ; 242 ; 342) du disque (140) est supérieure à une épaisseur de dent de la denture (120 ; 220 ; 320) de la roue dentée (118).

11. Ferrure à engrenage (300) selon l'une des revendications 8 à 10, **caractérisée en ce que** la denture (342) du disque (340) est tournée dans le sens circonférentiel par rapport à la denture (320) de la roue dentée (318).

12. Ferrure à engrenage (300) selon la revendication 11, **caractérisée en ce que** chaque flanc de dent de chaque dent de la denture (342) du disque (340) affleure dans la direction axiale avec chaque flanc de dent d'une dent de la denture (320) de la roue dentée (318).

13. Siège de véhicule (1) comprenant une partie d'assise (3) et un dossier (5) qui est articulé sur la partie d'assise (3) de manière réglable autour d'un axe de pivotement du dossier au moyen d'au moins une ferrure à engrenage (100 ; 200 ; 300) selon l'une des revendications 1 à 12.
